# EUROPÄISCHE PATENTSCHRIFT

(11) **EP 3 278 390 B1**
(45) Veröffentlichungstag und Bekanntmachung des Hinweises auf die Patenterteilung: **15.01.2020**
(21) Anmeldenummer: 16711294.5
(22) Anmeldetag: 23.03.2016
(51) Int. Cl.: H01M 8/0282, H01M 8/0276, H01M 8/0297, H01M 8/2425, C25B 1/08, C25B 9/20, H01M 8/0247, H01M 8/124

(54) **ANORDNUNG ELEKTROCHEMISCHER ZELLEN SOWIE DEREN VERWENDUNG**
ARRANGEMENT OF ELECTROCHEMICAL CELLS AND THE USE OF SAME
ENSEMBLE DE CELLULES ÉLECTROCHIMIQUES AINSI EMPLOI DUDIT ENSEMBLE

(30) Priorität: 30.03.2015 DE 102015205728; 01.04.2015 DE 102015205944
(43) Veröffentlichungstag der Anmeldung: 07.02.2018
(73) Patentinhaber: Fraunhofer-Gesellschaft zur Förderung der angewandten Forschung e.V., 80686 München (DE)
(72) Erfinder: MEGEL, Stefan, 01279 Dresden (DE); SCHADT, Lutz, 01328 Dresden (DE); KUSNEZOFF, Mihails, 01309 Dresden (DE); SCHILM, Jochen, 01445 Radebeul (DE); TROFIMENKO, Nikolai, 01069 Dresden (DE)
(74) Vertreter: Pfenning, Meinig & Partner mbB
(86) Internationale Anmeldenummer: PCT/EP2016/056360
(87) Internationale Veröffentlichungsnummer: WO 2016/156145

(56) Entgegenhaltungen:
- WO-A1-2006/099830
- WO-A2-02/13299
- DE-A1-102005 005 116
- DE-A1-102005 005 117
- DE-A1-102013 007 703

## Beschreibung

Die Erfindung betrifft eine Anordnung elektrochemischer Zellen sowie deren Verwendung und dabei insbesondere die Füge- und Kontaktelemente von elektrochemischen Zellen, die kostengünstig und automatisierbar als planarer Zellenstapel für Nutzung in der Elektrolyse und/oder bei Brennstoffzellen, insbesondere Festoxidbrennstoffzellen (SOFC) oder Festoxidelektrolysezellen (SOEC) herstellbar sind. Darüber hinaus bezieht sich die Erfindung auf effiziente Nutzung einer Folie aus einem Glas, die für die Fügung von benachbarten Wiederholeinheiten solcher elektrochemischer Zellen und Realisierung der Kontaktierung zwischen Elektroden und einer metallischen Bipolarplatte der elektrochemischen Zellen im Fügeprozess. Weiterhin betrifft die Erfindung ein SOFC-Stapel für die Gewinnung von elektrischem Strom und Wärme sowie SOEC-Stapel für hocheffiziente Wasserstoff- bzw. Synthesegaserzeugung.

Planare Zellenstapel für die Nutzung in der Energiewandlung und Wasserstoffgewinnung sind aus dem Stand der Technik bekannt. In der Regel werden mehrere planare Zellen zu einem Zellenstapel (s.g. Stack) zusammengefasst, in dem die einzelnen Wiederholeinheiten, bestehend aus der Kathode-Elektrolyt-Anoden-Einheit (s.g. Zelle), Bipolarplatte (s.g. Interkonnektor), Fügeelementen und Kontaktelementen, längs einer Stapelrichtung aufeinander folgen. Die elektrische Kontaktierung zwischen einzelnen Wiederholeinheiten erfolgt durch eine Wärmebehandlung (s.g. Fügeprozedur). Durch diese elektrische Verbindung der einzelnen Zellen über die Interkonnektoranordnungen werden die Zellen elektrisch in Reihe geschaltet, womit Zellenstapel auf eine benötigte Leistung skaliert werden können.

Eine Wiederholeinheit soll hier als Stapelelement definiert sein, das bei Raumtemperatur aus einzelnen Bauteilen (Zelle, Interkonnektor, Fügeelemente und Kontaktelemente) assembliert und im nachfolgenden Schritt für den Stackaufbau eingesetzt wird. Bei der Anwendung als Brennstoffzelle wird üblicherweise die Luftseite einer Zelle als Kathodenseite (dort läuft eine Sauerstoffreduktion ab) und die Brenngasseite als Anodenseite (dort läuft eine Wasserstoffoxidation ab) bezeichnet. Bei der Anwendung als Elektrolyseur wird die Luftseite zu Anodenseite (dort läuft Oxidation von Sauerstoff ab) und die Brenngasseite zu Kathodenseite (dort läuft Reduktion von Wasserstoff aus dem Wasserdampf ab).

Aus dem Stand der Technik sind mehrere Varianten zum Aufbau solcher Wiederholeinheiten für Anwendung als Brennstoffzelle bekannt (US 2003/0235746 A1, DE 103 30 476 B4, DE 103 50 478 B4, EP 2 132 814 B1, WO 2008/022638 A1). Dabei wird die stoffschlüssige und gasdichte Verbindung der Zelle an den Interkonnektor (s.g. Innenfügung) und die Abdichtung der Brenngas- und evtl. Lufträume (Manifolds) bei Verbindung der einzelnen Wiederholeinheiten (Außenfügung) in diesen Beschreibungen sowie in der einschlägigen Literatur separat betrachtet.

Die Analyse der erwähnten Schriften zeigt, dass in US 2003/0235746 A1 im Wesentlichen die Integration der Zelle mit mehrlagigem Interkonnektor (Innenfügung) beschrieben. Ein Interkonnektor besteht dabei aus vier metallischen Rahmen. Die jeweilige Zelle wird mit einem Rahmen mittels Glaslot verbunden. Dieser Aufbau wird dann mit Kathoden- und Anodenkontaktelementen (in Form von Stegen) versehen und damit zur Wiederholeinheit komplettiert. Die Gasräume der Wiederholeinheiten werden durch weitere Glaslotlagen (Außenfügung) abgedichtet. Damit sind in diesem Aufbau zwei Glaslotlagen unterschiedlicher Dicke und in unterschiedlichen Stackebenen notwendig, was kosteneffiziente Herstellung solcher Widerholeinheiten erschwert.

In DE 103 30 476 B4, insbesondere Figur 2 wird ein Aufbau einer Wiederholeinheit beschrieben, bei dem mindestens zwei Glaslotteile unterschiedlicher Dicke auf eine Seite der Wiederholeinheit aufgebracht werden müssen. Das erfordert den Einsatz von Glaslotfolien mit unterschiedlicher Dicke und mindestens zwei Applikationsschritte.

In DE 103 50 478 B4 wird ein Aufbau beschrieben, bei dem eine Zelle an ein metallisches Gehäuse angesintert (Innenfügung durch Versinterung der Zelle mit dem Interkonnektor) wird. Danach werden auf das hergestellte Teil die Kontaktelemente und Fügeelemente aufgebracht und dadurch die Wiederholeinheiten gebildet. Ein wesentlicher Nachteil dieser Lösung besteht in einem zusätzlichen Wärmebehandlungsschritt für die Ansinterung der Zelle an das Metallgehäuse.

In EP 2 132 814 B1 wird ein Verfahren zur effizienten Kontaktierung der Zelle mit dem Interkonnektor beschrieben (Innenfügung), wobei für die Innenfügung die Glaslotteile nur auf eine Seite des Interkonnektors aufgelegt werden müssen. Eine Außenfügung ist dort nicht beschrieben. Eine einseitige Applikation der Glaslotteile ist insbesondere bei dicken Fügeelementen (Dicke > 0,4 mm) problematisch und erfordert mehrfache Beschichtung oder mehrfaches Laminieren der Glaslotfolien aufeinander, was zusätzliche Kosten zur Folge hat.

In WO 2008/022638 A1 wird im Wesentlichen die Integration der Zelle mit einem mehrlagigen Interkonnektor beschrieben, wobei die Innenfügung und Außenfügung gleichzeitig realisiert werden kann, da die Elektrolytgröße und Form gleich der Größe der Metallrahmen ist. Dieser Aufbau ist bezüglich der Skalierung der Außenabmessungen durch den Unterschied in der thermischen Ausdehnung des Elektrolytwerkstoffs und des metallischen Interkonnektors begrenzt. In der Regel ist die Zellgröße (Zellgröße ist durch die Außenabmessungen der Zelle gegeben) geringer als die Größe des metallischen Interkonnektors.

Ausgehend von diesem Stand der Technik besteht weiterhin ein Bedarf an der Optimierung des Aufbaus der Wiederholeinheiten, bei denen die jeweilige Größe der Fläche einer planaren Zelle kleiner als die Fläche des Interkonnektors ist. Dies betrifft insbesondere die Anzahl der eingesetzten Fügeteile und der für deren Aufbringung und Verbindung notwendigen Schritte. Hierfür ist es optimal, wenn unabhängig von der Enddicke der Wiederholeinheiten Glaslotteile einheitlicher Dicke für die Außen- und Innenfügung eingesetzt werden können. Dabei ist es von Vorteil, dass diese symmetrisch auf beide Interkonnektorflächen aufgebracht werden können (einheitliche Appllikationstechnologie).

So ist in WO 02/13299 A2 ein Brennstoffzellenstapel mit integrierten Gasanschlüssen beschrieben.

DE 10 2013 007 703 A1 betrifft ein Verfahren zur Herstellung einer Glaslot-Gründichtung.

Interkonnektoren für Hochtemperaturbrennstoffzellen sind aus DE 10 2005 116 A1 und WO 2006/099830 A1 bekannt.

DE 10 2005 005 117 A1 betrifft Hochtemperaturbrennstoffzellen

Es ist daher Aufgabe der Erfindung, die Herstellung, insbesondere die Montage und das Fügen von Anordnungen elektrochemischer Zellen zu vereinfachen und eine hohe Dichtheit gegenüber der Umgebungsatmosphäre dauerhaft zu erreichen.

Erfindungsgemäß wird diese Aufgabe mit einer Anordnung, die die Merkmale des Anspruchs 1 aufweist, gelöst. Verwendungen sind im Anspruch 7 angegeben. Vorteilhafte Ausgestaltungen und Weiterbildungen der Erfindung können mit in untergeordneten Ansprüchen bezeichneten Merkmalen realisiert werden.

Die erfindungsgemäße Anordnung elektrochemischer Zellen, die übereinander angeordnet und elektrisch leitend miteinander verbunden sind, ist mit Wiederholeinheiten gebildet. Die Wiederholeinheiten bestehen aus mindestens einem Interkonnektor, einer elektrochemischen Zelle, die wiederum jeweils aus einer Kathode, einem Elektrolyt und einer Anode gebildet ist. In den Interkonnektoren sind Durchbrüche für die Gasführung ausgebildet. Weitere Elemente einer Wiederholeinheit sind Kontaktelementen auf der Anodenseite und Kathodenseite.

Die Elektrolyten schließen bündig jeweils mit einer Ebene einer Oberfläche des jeweiligen Interkonnektors ab. An dieser Oberfläche des Interkonnektors ist jeweils eine einzige Dichtungslage eines Glaslots mit konstanter Dicke angebracht. Mit dieser einzigen Dichtungslage ist eine Abdichtung des Spaltes zwischen Elektrolyt und dem Interkonnektor, die so genannte Innenfügung, und eine Abdichtung der Spalte zwischen Durchbrüchen für die Gasführung von zwei benachbarten Interkonnektoren, die so genannte Außenfügung erreichbar.

Bei der Erfindung ist somit eine Außen- und Innenfügung mit lediglich einer einzigen Dichtungslage eines Glaslots mit konstanter Dicke erreichbar, die auf einer Oberfläche eines jeweiligen Interkonnektors ausgebildet ist.

Die Anordnung kann an einer Stirnseite mit einer Deckplatte und an der gegenüberliegenden Stirnseite mit einer Grundplatte verschlossen sein.

Außerdem können die äußeren Ränder der einzelnen Elektrolyte der elektrochemischen Zellen bündig mit Rändern einer in einer Oberfläche des Interkonnektors ausgebildeten Kathodeneinsenkung abschließen.

An der abzudichtenden Oberfläche sind Bereiche, in denen Kanäle für die Gasführung, insbesondere für die Zuführung von Oxidationsmittel (z.B. Luft) und Brennstoff (z.B. Wasserstoff) und die Abfuhr von Abgas ausgebildet und der Bereich in dem ein Kontaktelement einer der Elektroden der elektrochemischen Zelle angeordnet ist, sollte von Glaslot frei gehalten sein.

Nachfolgend soll die Erfindung für den Aufbau eines Zellstapels für elektrochemische Anwendung als Brennstoffzelle beispielhaft beschrieben werden (Kathodenseite = Luftseite, Anodenseite = Brenngasseite). Der Zellstapel kann auch für Elektrolyse angewendet werden, dabei wird Luftseite zur Anodenseite und die Brenngasseite zur Kathodenseite.

Dabei zeigen:
Figuren 1 und 2 in perspektivischer und in einer Schnittdarstellung den prinzipiellen Aufbau einer Wiederholeinheit;
Figur 3 in perspektivischer und in einer Schnittdarstellung den prinzipiellen Aufbau einer Wiederholeinheit mit Glaslotfolienelementen im Grünzustand, an zwei gegenüberliegend angeordneten Oberflächen einer Wiederholeinheit, mit denen Dichtungslagen gebildet werden;
Figur 4 mögliche Ausbildungen und Anordnungen von Glaslotfolienelementen in einer Ebene an einer Oberfläche einer Wiederholeinheit;
Figur 5 eine Schnittdarstellung durch ein Beispiel einer erfindungsgemäßen Anordnung und
Figur 6 eine perspektivische Schnittdarstellung Darstellung eines Beispiels einer erfindungsgemäßen Anordnung.

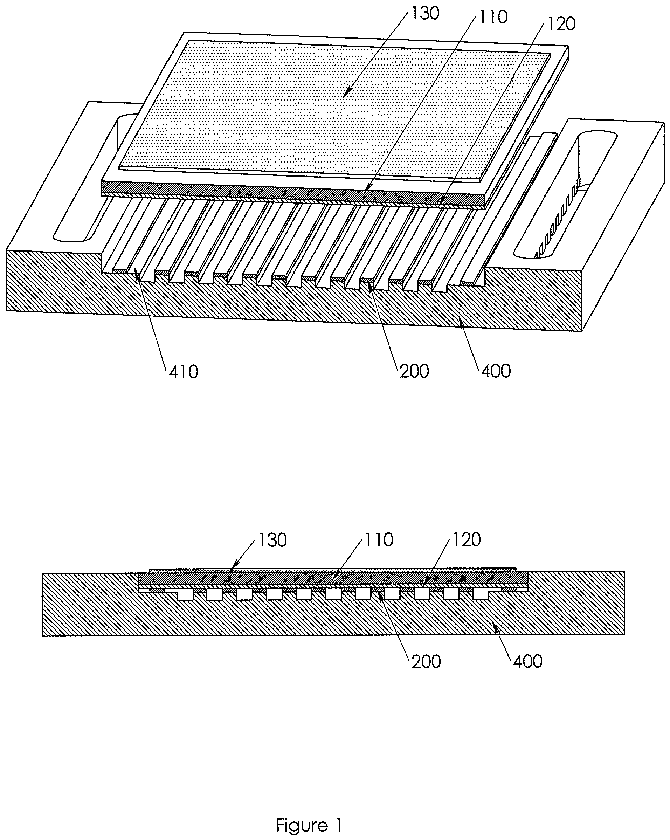

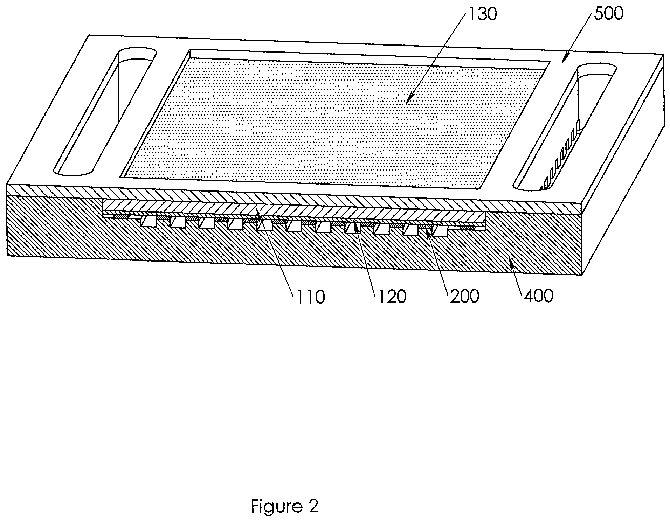

Die Figuren 1 und 2 zeigen den Aufbau von Wiederholeinheiten, wie sie bekannt sind und bei der Erfindung eingesetzt werden können. Dabei ist ein Interkonnektor 400 vorhanden, der eine größere Flächenausdehnung als eine Einheit, die mit einer Kathode 120 und einer Anode 130, zwischen denen ein geeigneter Elektrolyt 110 angeordnet ist, gebildet ist. Im Bereich der Kathoden-Elektrolyt-Anoden-Einheit (KEA) ist im Interkonnektor 400 eine Kathodeneinsenkung 410 ausgebildet, in die die KEA eingesetzt werden kann, so dass zumindest der Elektrolyt 110 mit seinen äußeren seitlichen Stirnseiten am Interkonnektorwerkstoff anliegt. Im Bereich der Kathodeneinsenkung 410 bilden Erhebungen und Vertiefungen Gaskanäle durch die Oxidationsmittel zur Kathode 120 gelangen kann.

In den perspektivischen Darstellungen von Figur 1 und 2 sind neben der Kathodeneinsenkung 410 nicht bezeichnete Aussparungen gezeigt, die Kanäle bilden und über die eine Zufuhr von Oxidationsmittel (insbesondere Luft) oder Brennstoff bzw. eine Abfuhr von Abgas erfolgen kann.

Mit Figur 2 soll außerdem gezeigt werden, wie eine Dichtungslage 500 auf der Oberfläche des Interkonnektors 400 ausgebildet und mit dieser verbunden ist. Die Dichtungslage 500 weist dabei Aussparungen auf, die die Zugänglichkeit der Anode 130 und der Kanäle für Oxidationsmittel, Brennstoff bzw. Abgas ermöglicht.

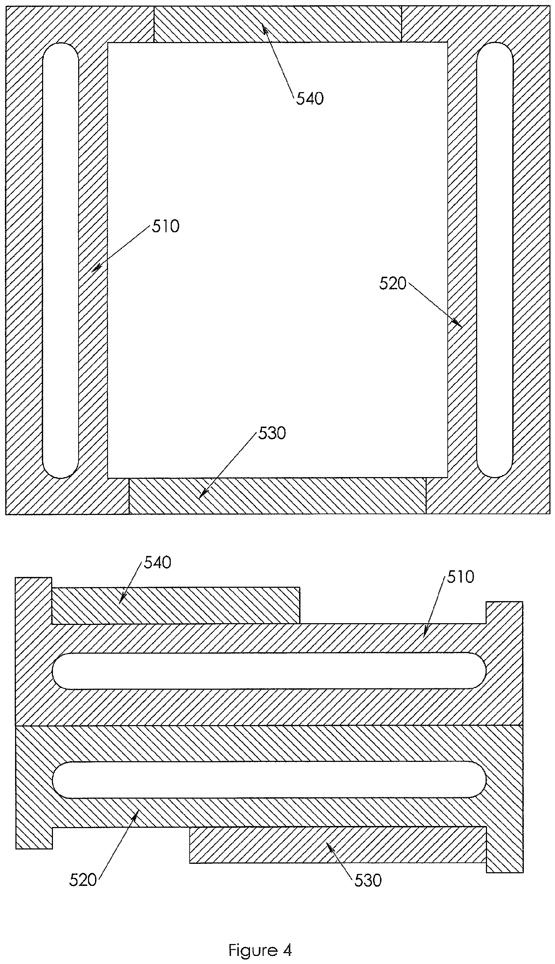

Mit Figur 4 wird deutlich, dass die an den zwei gegenüberliegenden Oberflächen eines Interkonnektors 4 stoffschlüssig zu verbindende Dichtungslage mit mehreren Glaslotfolienelementen 510, 520, 530 und 540 gebildet werden kann. Die Glaslotfolienelemente 510, 520, 530 und 540 stoßen dabei mit Stirnflächen aneinander und bilden so eine geschlossene Dichtungslage 500 um die Anode 130 und die Kanäle.

Mögliche geometrische Formen und Anordnungen von Glaslotfolienelementen 510, 520, 530 und 540 sind in Figur 4 gezeigt.

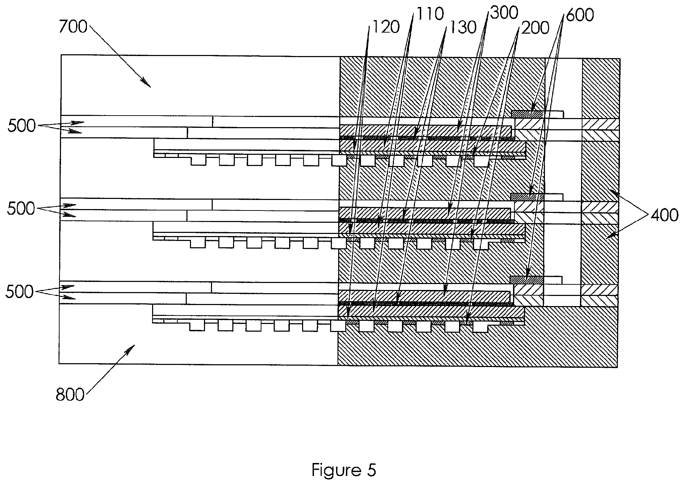

Ein Beispiel einer erfindungsgemäßen Anordnung ist in der Teilschnittdarstellung von Figur 5 gezeigt. Dabei sind drei Wiederholeinheiten von einer Deckplatte 700 an einer Stirnseite und von einer Grundplatte 800 an der gegenüberliegend angeordneten Stirnseite eingefasst und es kann dort so ein fluiddichter Verschluss mit Deckplatte 700 und Grundplatte 800 erreicht werden. Beide Platten 700 und 800 können aus einem elektrisch leitfähigen Werkstoff bestehen.

Außerdem wird deutlich, dass die Abdichtung zwischen Wiederholeinheiten mit jeweils einer Dichtungslage 500, die mit einer Oberfläche eines Interkonnektors 400 einer Wiederholeinheit mit einer Dichtungslage 500, die mit einer Oberfläche eines Interkonnektors 400 einer unmittelbar benachbarten Wiederholeinheit stoffschlüssig verbunden ist, erreicht werden kann.

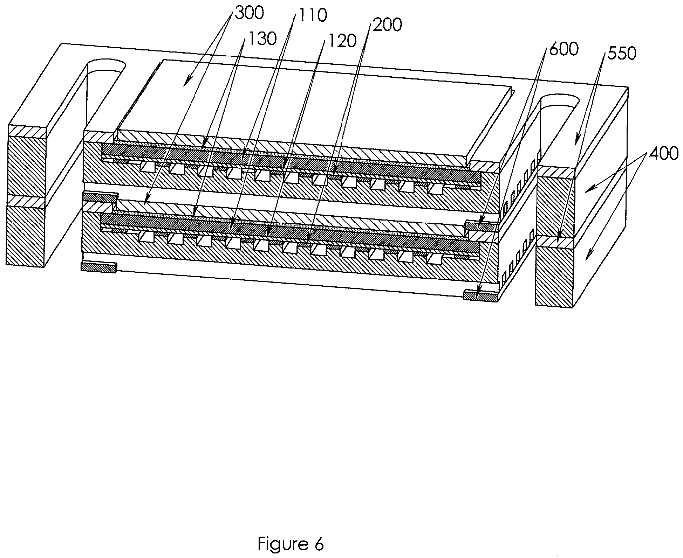

Aus den Figuren 5 und 6 wird auch deutlich, dass die Größe der Flächen der elektrochemischen Zellen, also den KEA's kleiner als die Fläche die Fläche von Interkonnektoren 400 ist.

In Figur 6 ist eine nach einer Wärmebehandlung hergestellte fertige Anordnung gezeigt, bei der zwischen den benachbarten Wiederholeinheiten jeweils eine gesinterte Dichtungslage 550 vorhanden ist, die mit den jeweiligen Oberflächen der jeweiligen Interkonnektoren 400 stoffschlüssig verbunden sind. Außerdem sind kathodenseitige Kontaktelemente 200 und anodenseitige Kontaktelemente 300 erkennbar, mit denen ein elektrischer Stromfluss durch Gasversorgungsstruktur, in der Oxidationsmittel und Brennstoff zu den Elektroden 120 und 130 gelangen kann, von den Elektroden 120 und 130 zu dem jeweiligen Interkonnektor 400 erreicht wird.

Eine einheitliche Gesamtdicke der Glaslotfolienelemente 510 bis 540 kann nur dann genutzt werden, wenn zwei plane ebene Flächen miteinander verbunden werden sollen. Der der Erfindung zu Grunde liegende Lösungsansatz besteht auch darin, dass die Verbindung einer elektrochemischen Zelle 100 mit einem Interkonnektor 400 so erfolgt, dass eine Oberfläche des Elektrolyten 110 einer Zelle 100 mit einer der Interkonnektoroberflächen eine bündige planare Ebene bildet (siehe Beispiel in der Fig. 1). Dazu können das jeweilige Kathodenkontaktelement 300, Kathode 130 und Elektrolyt 110 in einer kathodenseitigen Aussparung 410 des jeweiligen Interkonnektors 400 aufgenommen sein. Die gegenüberliegend angeordnete Oberfläche des Interkonnektors 400 weist keine Aussparung auf und Glaslotfolienelemente 510 bis 540 müssen lediglich das anodenseitige Kontaktelement 300 und die Dicke der Anode 120 (in diesem Fall < 50 µm) überbrücken. Bei dünnen anodenseitigen Kontaktelementen 200 (< 100 µm) kann beispielsweise Siebdruck oder Maskendruck für das Auftragen des Glaslotes einheitlicher Dicke auf die gegenüberliegende Oberfläche des Interkonnektors 400 zum Fügen genutzt werden.

Bei der Applikation der Glaslotfolie auf Elemente werden derzeit Hilfsmittel verwendet, um die fertigen Glaslotfolienteile auf eine Oberfläche des Interkonnektors oder Oberflächen der elektrochemischen Zelle manuell aufzukleben. Dabei ist eine geometrisch exakte Platzierung schwierig und meist nur mit Hilfsmitteln oder sehr starren entsprechend dicken Glaslotfolien zu erreichen, die sehr zeitintensiv sind. Die Applikation der Glaslotfolienelemente 510 bis 540 kann bei der Erfindung von einer halbautomatischen Maschine übernommen werden, bei der der Stanzprozess und die Applikation nacheinander durchführbar sind. Durch das Stanzen der Glaslotfolienelemente 510 bis 540 und das Fixieren auf der Matrize einer Stanze haben die Glaslotfolienelemente 510 bis 540 eine sehr hohe Genauigkeit in Form und Position. Da der Applikationsprozess durch einen programmierten Robotergreifer kann, der direkt an den für das Stanzen genutzten Teil der halbautomatischen bevorzugt automatisch arbeitenden Maschine angeschlossen sein kann, muss keine Positionierung oder Magazinierung der Glaslotfolienelemente 510 bis 540 erfolgen. Die Glaslotfolienelemente 510 bis 540 können dadurch mikrometergenau positioniert werden. Alle Nachteile, die durch ein zusätzliches Handling von gestanzten Glaslotfolien hervorgerufen werden, können dadurch umgangen werden.

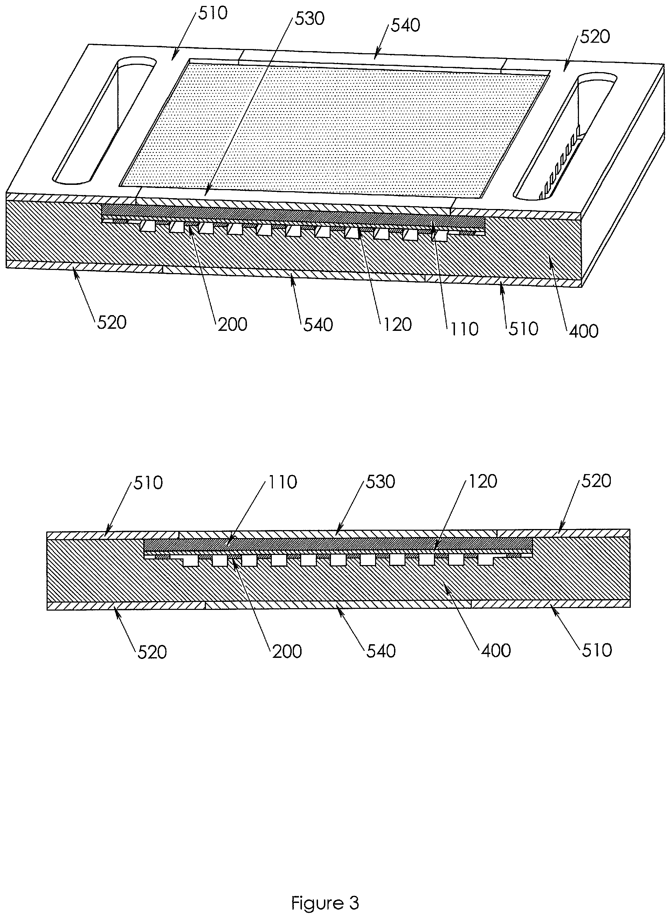

In der Regel hat das anodenseitige Kontaktelement 300 eine Dicke von 0,3 mm bis 0,5 mm. Die Dicke des anodenseitigen Kontaktelementes 200 bestimmt bei einem ausgewählten Beispiel letztendlich die Gesamtdicke einer elektrochemischen Zelle 100 nach dem Fügen. Die miteinander zu fügenden Elemente weisen dabei im ungesinterten (s.g. "grünem") Zustand unter Berücksichtigung von ca. 50% Schwindung vor dem Sintern eine Gesamtdicke von ca. 0,6 bis 1,0 mm auf. In diesem Dickenbereich ist es sinnvoll, zum Fügen Glaslotfolie einzusetzen. Prinzipiell ist es technisch möglich, die Glaslotfolienelemente 510 bis 540 in dieser Dickengrößenordnung durch Foliengießen herzustellen. Allerdings sind die zulässigen Dickentoleranzen von ca. +/-10 µm im getrockneten Zustand kaum erreichbar. Aus diesem Grund ist es kostengünstiger die Glaslotfolienelemente 510 bis 540 mit einer Dicke von 0,25 mm bis max. 0,45 mm durch Foliengießen herzustellen und miteinander zu laminieren. Damit wären bei einseitiger Auflage zwei bis vier Laminierschritte, mit denen die einzelnen Glaslotfolien miteinander verbunden werden, erforderlich. Damit dieser Aufwand vermieden wird, können Glaslotfolienelemente 510 bis 540 symmetrisch auf gegenüberliegende Oberflächen des Interkonnektors 400 aufgelegt werden (vgl. Fig. 2 und Fig. 3). Dabei können Glaslotfolienelemente 510 bis 540 mit gegenseitig abweichenden (s.g. komplementären) Dickentoleranzen, wie sie beim Foliengießprozess unterschiedlicher Chargen auftreten, eingesetzt und damit Ausschuss bei der Glaslotfolienherstellung erheblich reduziert werden. Weiterhin können die Glaslotfolien aus einfachen Bestandteilen zusammengesetzt und damit kann Ausschuss beim Stanzen der Fügeteile reduziert werden.

Figur 4 zeigt die Geometrie und Dicke der Glaslotfolienelemente 510, 520, 530 und 540, die für eine Dichtungslage 500 eingesetzt werden können, wenn die Dicke der anodenseitigen Kontaktierung 350 µm und Anodendicke 50 µm betragen sollen. Die Glaslotfolienelemente 510, 520, 530 und 540 werden aus grüner Glasfolie mit einer Dicke von 350+/-20 µm ausgestanzt und im nachfolgenden Schritt automatisch auf einer Oberfläche einer vorassemblierten Wiederholeinheit (Fig. 3) aufgelegt. Die Glaslotfolienelemente 510, 520, 530 und 540 werden vorher vermessen und in Dickenklassen vorsortiert, so dass die Summe der Dicke der übereinander angeordneten Glaslotfolienelemente in einer gemeinsamen Fügeebene auf den beiden gegenüberliegenden Seiten 700 +/-20 µm ergibt.

Bei der dargestellten Lösung kommt es dazu, dass Stoßstellen zwischen einzelnen Glaslotfolienelementen 510, 520, 530 und 540 auftreten können, die im nachfolgenden Fügeprozess durch viskoses Fließen des Glaslotes geschlossen werden können. Vorteilhaft wäre dabei eine Drehung des Interkonnektors 400 um 180°, bevor die gleichen Glaslotfolienelemente 510, 520, 530 und 540 auf der anderen Seite der vorassemblierten Wiederholeinheit aufgelegt werden. Damit sind die Stoßstellen der Glaslotfolienelemente auf den gegenüberliegenden Oberflächen des Interkonnektors 400 nicht übereinander angeordnet (Fig. 5) und können dadurch beim Fügeprozess einfacher geschlossen werden.

Durch die halbautomatische oder automatische Applikation der Glaslotfolienelemente 510, 520, 530 und 540 auf eine Oberfläche eines Interkonnektors 400 kann eine effiziente und qualitativ hochwertige Beschichtung mit Glaslotfolien unterschiedlicher Eigenschaften (auch sehr weiche) erreicht werden. Im weiteren Prozess wird auf die gegenüberliegend angeordnete Oberfläche des Interkonnektors 400 die jeweilige elektrochemische Zelle 100 mit ihrer Anodenkontaktierung 200 aufgebracht. Auf diesen Verbund wird mittels halbautomatischer oder automatischer Glaslotfolienappliziermaschine die zweite Schicht Glaslotfolienelemente 510 bis 540 um 180° verdreht aufgebracht. Eine manuelle Glaslotfolienapplikation auf diesen Verbund kann aus technischen und zeitlichen Gründen vorteilhafter weise halbautomatisch oder vollautomatisch erfolgen. Durch Nutzung von Kassetten für Interkonnektor 400 und Glaslotfolienelemente 510 bis 540 ist mit diesen Prozessen eine vollautomatische Glaslotfolienapplizierung möglich.

Die Wiederholeinheiten werden übereinander gestapelt und mit Deckplatte 700 und Grundplatte 800 versehen (Fig. 5). Anschließend wird der Zellenstapel (Stack) mit einer Wärmebehandlung unter Nutzung des Glaslotes stoffschlüssig und dicht gefügt. Dabei wird die Kontaktierung zwischen Anode 120 der Zelle 100 und dem Anodenkontaktelement 200 sowie die serielle Verschaltung der Zellen 100 untereinander realisiert, wie es in Figur 6 gezeigt ist. Nach einer elektrochemischen Initialisierungsprozedur ist der Zellenstapel (Stack), der mit mehreren übereinander angeordneten Wiederholeinheiten gebildet ist, fertig für den Einsatz als Brennstoffzelle oder Elektrolyseur.

### Bezugszeichenverzeichnis:

100 elektrochemische Zelle
110 Elektrolyt
120 Kathode
130 Anode
200 Kontaktelement Kathode/Luftseite
300 Kontaktelement Anode/Gasseite
400 Interkonnektor mit/ohne Schutzschicht
410 Kathodeneinsenkung
500 Dichtungslage aus Glaslot im grünen Zustand
510 Glaslotfolienelement
520 Glaslotfolienelement
530 Glaslotfolienelement
540 Glaslotfolienelement
550 Dichtungslage im gefügten Zustand
600 Einlegeplättchen
700 Deckplatte
800 Grundplatte

## Patentansprüche

1. Anordnung elektrochemischer Zellen, die übereinander angeordnet und elektrisch leitend miteinander verbunden sind, und dabei Wiederholeinheiten, die aus mindestens einem Interkonnektor (400), in dem Durchbrüche für die Gasführung ausgebildet sind, einer elektrochemischen Zelle (100), die aus einer Kathode (120), einem Elektrolyt (110) und einer Anode (130) gebildet ist, Kontaktelementen auf der Anodenseite (300) und der Kathodenseite (200) gebildet sind, übereinander angeordnet sind und
die Fläche der einzelnen planaren elektrochemischen Zellen (100) jeweils kleiner als die Fläche der einzelnen Interkonnektoren (400) ist, und
die Elektrolyten (110) bündig jeweils mit einer Ebene einer Oberfläche des jeweiligen Interkonnektors (400) abschließen und an dieser Oberfläche des Interkonnektors (400) jeweils eine einzige Dichtungslage (500) eines Glaslots mit konstanter Dicke,
zur Abdichtung des Spaltes zwischen Elektrolyt (110) und Interkonnektor (400) und der Spalte zwischen Durchbrüchen für Gasführung von zwei benachbarten Interkonnektoren (400),
angebracht ist;
**dadurch gekennzeichnet, dass**.
die Dichtungslagen (500) mit Glaslotfolienelementen (510, 520, 530 und 540) gebildet sind und
die Dichtungslagen (500) mit konstanter Dicke auf zwei an gegenüberliegenden Oberflächen einer Wiederholeinheit Stoßstellen bilden, die lokal versetzt zueinander senkrecht zur Dichtungslagenebene angeordnet sind.

2. Anordnung nach Anspruch 1, **dadurch gekennzeichnet, dass** die Anordnung an einer Stirnseite mit einer Deckplatte (700) und an der gegenüberliegenden Stirnseite mit einer Grundplatte (800) verschlossen ist.

3. Anordnung nach Anspruch 1 oder 2, **dadurch gekennzeichnet, dass** elektrochemische Zellen in einer Oberfläche des jeweiligen Interkonnektors (400) ausgebildeten Kathodeneinsenkung (410) angeordnet sind und/oder die Dichtungslagen Bereiche in denen ein Kontaktelement (200 oder 300) sowie Bereiche in denen Kanäle für die Zuführung eines Oxidationsmittels oder Brennstoffs oder die Abführung von Abgas von Glaslot freigehalten sind.

4. Anordnung nach einem der vorhergehenden Ansprüche, **dadurch gekennzeichnet, dass** die Glaslotfolienelemente (510, 520, 530 und 540) einer Dichtungslage (500) an Stoßstellen unmittelbar aneinander stoßen.

5. Anordnung nach dem vorhergehenden Anspruch, **dadurch gekennzeichnet, dass** jeweils gleich ausgebildete Glaslotfolienelemente (510, 520, 530 und 540) auf zwei an gegenüberliegenden Oberflächen einer Wiederholeinheit um 180 ° zueinander gedreht angeordnet sind.

6. Anordnung nach einem der vorhergehenden Ansprüche, **dadurch gekennzeichnet, dass** die Glasfolienelemente (510, 520, 530 und 540) für eine vollautomatische Montage mittels Roboter ausgebildet sind.

7. Verwendung einer Anordnung nach einem der vorhergehenden Ansprüche als Brennstoffzelle und/oder Elektrolyseur.

## Claims

1. Arrangement of electrochemical cells which are arranged one above another and in electrically conducting communication with one another, where repeating units, which are formed of at least one interconnector (400), in which there are apertures for gas passage are formed, an electrochemical cell (100), formed of a cathode (120), an electrolyte (110) and an anode (130), and contact elements on the anode side (300) and the cathode side (200), are arranged one above another, and
the area of the individual planar electrochemical cells (100) is in each case smaller than the area of the individual interconnectors (400), and
the electrolytes (110) finish flush in each case with a plane of a surface of the respective interconnector (400), and mounted at this surface of the interconnector (400) in each case is a single sealing ply (500) of a glass solder having constant thickness,
for sealing the gap between electrolyte (110) and interconnector (400) and the gaps between apertures for gas passage of two adjacent interconnectors (400); **characterized in that**
the sealing plies (500) are formed with glass solder sheet elements (510, 520, 530 and 540) and
the sealing plies (500) with constant thickness are forming hit points on two opposing surfaces of a repeating unit which are arranged locally offset from one another perpendicularly to the sealing ply plane.

2. Arrangement according to Claim 1, **characterized in that** the arrangement is closed off with a top plate (700) at one end side and with a baseplate (800) on the opposite end side.

3. Arrangement according to Claim 1 or 2, **characterized in that** electrochemical cells are arranged in a cathode recess (410) formed in a surface of the respective interconnector (400) and/or the sealing plies are regions in which a contact element (200 or 300) and also regions in which channels for supplying an oxidant or fuel or for removing off-gas are kept free of glass solder.

4. Arrangement according to any of the preceding claims, **characterized in that** the glass solder sheet elements (510, 520, 530 and 540) of a sealing ply (500) abut one another directly at joins.

5. Arrangement according to the preceding claim, **characterized in that** glass solder sheet elements (510, 520, 530 and 540) each identical in form are arranged rotated by 180° from one another on two opposing surfaces of a repeating unit.

6. Arrangement according to any of the preceding claims, **characterized in that** the glass sheet elements (510, 520, 530 and 540) are formed by robots for fully automatic assembly.

7. Use of an arrangement according to any of the preceding claims as a fuel cell and/or electrolyzer.

## Revendications

1. Disposition de cellules électrochimiques qui sont superposées et qui sont reliées entre elles de manière électroconductrice et des unités de répétition, qui sont constituées d'au moins un interconnecteur (400), dans lequel des passages pour le guidage du gaz sont réalisés, d'une cellule électrochimique (100), qui est constituée d'une cathode (120), d'un électrolyte (110) et d'une anode (130), des éléments de contact réalisés sur le côté de l'anode (300) et sur le côté de la cathode (200), étant superposés et
la surface des différentes cellules électrochimiques planaires (100) étant inférieure à la surface des différents interconnecteurs (400) et
les électrolytes (110) se terminant chacun en affleurement avec un plan d'une surface de l'interconnecteur (400) correspondant et, sur cette surface de l'interconnecteur (400) est appliquée une seule couche d'étanchéité (500) d'une brasure de verre avec une épaisseur constante,
pour l'étanchéification de l'interstice entre l'électrolyte (110) et l'interconnecteur (400) et des interstices entre les passages pour le guidage du gaz de deux interconnecteurs (400) adjacents ;
**caractérisé en ce que**
les couches d'étanchéité (500) sont constituées d'éléments de film à brasure de verre (510, 520, 530 et 540) et
les couches d'étanchéité (500) d'épaisseur constante constituent, sur deux surfaces opposées d'une unité de répétition, des zones d'aboutement, qui sont disposées de manière décalée localement entre elles et perpendiculaires au plan des couches d'étanchéité.

2. Disposition selon la revendication 1, **caractérisée en ce que** la disposition est fermée au niveau d'une face frontale avec une plaque de recouvrement (700) et au niveau de la face frontale opposée avec une plaque de base (800).

3. Disposition selon la revendication 1 ou 2, **caractérisée en ce que** les cellules électrochimiques sont disposées dans une dépression de cathode (410) réalisée dans une surface de l'interconnecteur (400) correspondant et/ou les couches d'étanchéité comprennent des zones dans lesquelles un élément de contact (200 ou 300) ainsi que des zones dans lesquelles des canaux pour l'introduction d'un moyen d'oxydation ou d'un combustible ou l'évacuation des gaz sont exempts de la brasure de verre.

4. Disposition selon l'une des revendications précédentes, **caractérisée en ce que** les éléments de film à brasure de verre (510, 520, 530 et 540) d'une couche d'étanchéité (500) sont assemblés bout à bout entre eux directement au niveau de points d'aboutement.

5. Disposition selon l'une des revendications précédentes, **caractérisée en ce que** des éléments de film à brasure de verre (510, 520, 530 et 540) réalisés de manière identique sont disposés sur deux surfaces opposées d'une unité de répétition, tournés de 180° entre eux.

6. Disposition selon l'une des revendications précédentes, **caractérisée en ce que** les éléments de film à brasure de verre (510, 520, 530 et 540) sont conçus pour un montage entièrement automatique au moyen de robots.

7. Utilisation d'une disposition selon l'une des revendications précédentes en tant que cellule à combustible et/ou qu'électrolyseur.
